# FASCICULE DE BREVET EUROPEEN

(11) **EP 1 128 664 B1**
(45) Date de publication et mention de la délivrance du brevet: **15.08.2018**
(21) Numéro de dépôt: 01400323.0
(22) Date de dépôt: 08.02.2001
(51) Int. Cl.: H04N 21/438, H04N 21/434

(54) **Procédé de commande d'un décodeur de télévision**
Verfahren zur Steuerung eines Fernsehdekodierers
Method to control a television decoder

(30) Priorité: 25.02.2000 FR 0002430
(43) Date de publication de la demande: 29.08.2001
(73) Titulaire: SAGEMCOM BROADBAND SAS, 92500 Rueil-Malmaison (FR)
(72) Inventeur: Torche, M.Fabien, 95800 Cergy Saint Christophe (FR)
(74) Mandataire: Cabinet Camus Lebkiri

(56) Documents cités:
- EP-A- 0 834 991
- EP-A- 0 854 650
- EP-A- 0 917 370
- WO-A-00/01213
- WO-A-98/24200
- WO-A-99/03266
- US-A- 5 418 782
- US-A- 5 734 589

## Description

La présente invention a pour objet un procédé de commande d'un décodeur de télévision. L'invention est plus particulièrement destinée à la télévision dite numérique, que des signaux pour celle-ci soient transmis par un câble (dans des bandes de fréquence de 170 à 862 MHz), par un satellite (dans des bandes de fréquence de 10,3 à 12,8 GHz), ou par voie terrestre (dans des bandes de 17 à 862 MHz). Le but de l'invention est de limiter la taille d'une mémoire à utiliser dans de tels décodeurs et de simplifier la reconstruction par ces décodeurs de tables de paramètres qui permettent leurs réglages.

Typiquement un récepteur de télévision numérique comporte un décodeur relié par ailleurs à un dispositif de visualisation. Le décodeur comporte des moyens de réception pour recevoir les signaux émis et des moyens de formatage pour transformer les signaux reçus en des signaux applicables directement sur les organes de commande du dispositif de visualisation. Pour un tube cathodique, il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue les tables dites SI, System Information - Information Système - qui, dans la norme DVB, peuvent représenter un titre d'un programme diffusé, une heure de début, une heure de fin, ainsi que d'autres caractéristiques. Le contenu des tables SI intéresse particulièrement l'utilisateur car elles conduisent à afficher des informations qui permettent à l'utilisateur de choisir le programme qu'il veut visualiser. D'autres tables dites PSI, Program Specific Information - Information Spécifique de Programme - décrites dans la norme MPEG, sont des tables fonctionnelles d'identification de paquets vidéo audio ou de données. Elles représentent en définitive le protocole de transmission et l'architecture des paquets numériques transmis ainsi que leur signification. Les tables PSI servent à afficher les images d'un programme visualisé.

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets et dans certains cas 4096 octets. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données, ou autre. Dans chaque section, des identifiants permettent d'attribuer les paquets de données à des tables particulières parmi d'autres. En réception, un décodeur ne sait pas à priori comment sont répartis les paquets de données mais il connaît le découpage des sections. Le décodeur doit donc lire l'identifiant dans chaque section et réorganiser les données pour les affecter aux bonnes tables. Toutes les tables sont éditées par les opérateurs de télévision ou les gestionnaires de média de transport, sont incorporées dans le flux de cet opérateur, et sont acheminées vers les utilisateurs par les différents média.

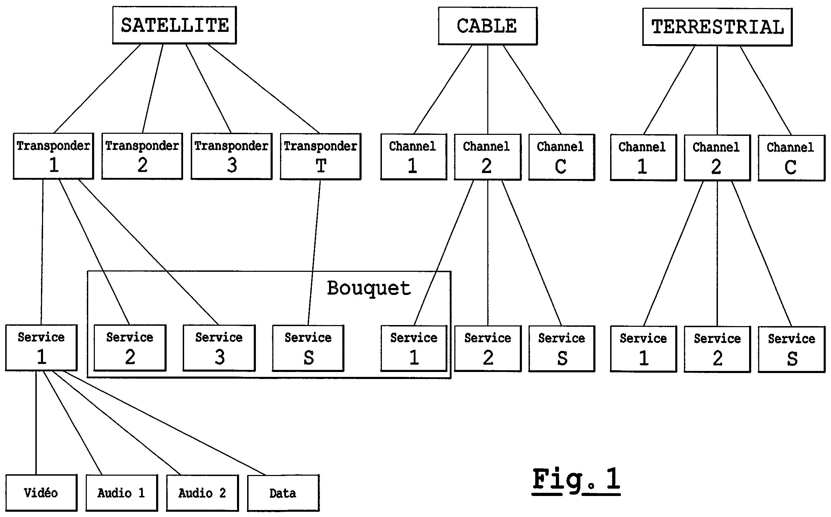

La figure 1 montre une représentation des différents médias de transmission. Elle permet par ailleurs de figer le vocabulaire utilisé dans le domaine. Des moyens d'émission réception comportant des satellites, des câbles ou des dispositifs de rediffusion terrestre constituent des réseaux de transmission. Pour chaque média de transmission il existe une table dite NIT, Network Information Table - Table d'Information de Réseau, qui indique le nom du réseau, le numéro du réseau, et pour chacun des multiplex du réseau, des transpondeurs quand il s'agit de liaison par satellite, des informations telles que fréquence de modulation, position orbitale de bits, polarisation, codage de correction d'erreur etc... Ces dernières informations sont rassemblées sous le vocable de delivery - informations permettant la délivrance physique des sections de paquets. Des informations similaires sont contenues dans les tables NIT des médias de transmission câble ou terrestre. Les informations contenues dans les tables NIT sont des paramètres physiques permettant essentiellement à un décodeur de se caler en fréquence pour capter chaque multiplex.

Chaque multiplex émet une table SDT qui comporte des sous-tables. Chaque sous-table décrit chacun des services qui sont véhiculés par le multiplex. Ces services peuvent faire partie des services distribués par un transpondeur ou par un autre transpondeur. Ceci est identifié à partir de la table NIT.

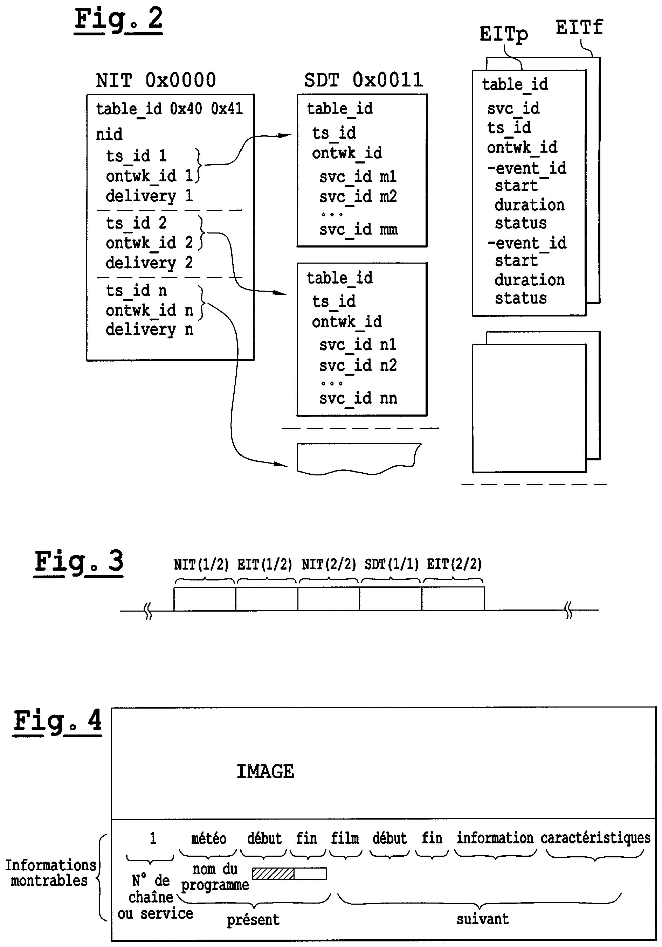

Une table SDT transmise dans le flux, figure 2, comporte, pour un transpondeur désigné dans une table NIT, une liste de services véhiculés par le transpondeur. Cette liste est normalement limitée, quelquefois à huit services, du fait de la limitation de bande passante réservée pour un transpondeur. Par service on entend classiquement ce que les utilisateurs appellent une chaîne de télévision, par exemple une chaîne diffusant au cours de la journée des programmes successifs les uns aux autres. Néanmoins les services peuvent être des services uniquement audio, en une ou plusieurs langues, ou des services de données, ou autres, notamment interactif.

Chaque service est identifié dans une table SDT d'un multiplex par un triplet représentant une information dite Original Network Id (ontwk_id) - Identification de réseau origine. Un service est encore identifié par l'information Transport Stream Id (ts_id) - Identification de multiplex, typiquement cette information désigne un des transpondeurs en relation avec le réseau. Enfin le service est identifié par une information dite Service Id (svc_id) - Identification de Service, qui sera en pratique un numéro attribué, par un opérateur qui gère le réseau, à la transmission de ce service. Dans le message correspondant à la table NIT le décodeur récupère essentiellement le triplet selon la norme DVB ainsi que les paramètres physiques du transpondeur.

En ce qui concerne les transpondeurs, chacun diffuse en outre une table dite PAT, Program Association Table - Table des programmes associés, table qui elle-même donne une liste de tables PMT, Program Map Table - Table de composants des programmes, qui sont associées à chacun des services.

Au niveau des services, on trouvera des tables dites EIT, Event Information Table - Table d'événements, et des tables PMT. Les tables EIT se réfèrent à chaque service, à partir de son triplet d'identification selon la norme DVB, et indiquent pour ce service l'heure de début, la durée ou l'heure de fin, le statut, ainsi que d'autres informations relatives à un programme diffusé. Les tables EIT sont par ailleurs dédoublées en EITp et EITf pour représenter une table correspondant à l'instant présent (p), et ainsi qu'une autre table correspondant à un instant suivant (f, following). Les deux tables EITp et EITf sont de même structure mais possèdent chacune un identifiant renseignant sur leur qualité.

En définitive toute une architecture de tables est ainsi distribuée, en particulier selon la norme EN 300 468 V1.3.1 et le but du décodeur est de reconstruire toutes les tables pour disposer des informations de réglage ainsi que des informations à montrer en visualisation pour les utilisateurs.

En pratique, dans le flux des sections de paquets, figure 3, les tables NIT, SDT et EIT sont transmises par parties imbriquées dans le temps selon les normes. Elles possèdent des identifiants dans le flux égaux respectivement à 0x0010, 0x0011, et 0x0012 complétés par une information table_id. Cette dernière information est donc présente souvent dans le flux.

La figure 4 montre typiquement une image diffusée sur un dispositif de visualisation recevant des signaux selon ce qui a été décrit ci-dessus. L'image visualisée peut être complétée par des informations montrables, prélevées dans les tables EIT, concernant le numéro de la chaîne ou en pratique du service, le nom du programme, ainsi que son heure de début et son heure de fin. Cette dernière indication peut par ailleurs être remplacées par un index fluctuant dans le temps montrant d'une manière intuitive le temps déjà écoulé pour le programme et le temps restant à diffuser. Par ailleurs, ces informations montrables comportent les indications correspondant à un programme suivant avec, encore une fois, le nom du programme, l'heure de début, l'heure de fin ainsi que diverses informations (titre d'un film, nom des acteurs) et des caractéristiques, présence d'un carré blanc ou autre. Les informations montrables ne sont pas systématiquement juxtaposées à côté de l'image. Elles peuvent être affichées par l'utilisateur en appuyant sur une touche particulière de sa télécommande.

La norme MPEG2 permet de multiplexer plusieurs programmes dans un même Transport Stream (TS) ou canal. Cette norme est complétée par la norme DVB qui permet la constitution et le zapping sur plusieurs transpondeurs au sein d'un même et unique réseau. Tous les programmes numériques sont repérés par un triplet (original_network_id - ontwk_id, transport_stream_id, ts_id, et service_id, svc_id). Chaque opérateur diffuse donc une signalisation plus ou moins complète permettant la constitution d'une liste de services accessibles à partir d'une connexion unique sur un transpondeur. Le doublet ontwk_id, ts_id identifie, dans la table SDT notamment, le multiplex (transpondeur ou canal) auquel appartient un service. Et à chaque multiplex est associé un delivery définissant les caractéristiques physiques telles que la fréquence de connexion pour accéder au service.

En pratique, tous les paramètres physiques de réception ne sont pas transmis dans le flux. En effet, certains de ces paramètres dépendent du lieu de réception. C'est particulièrement le cas en transmission satellitaire avec les angles de site, et en transmission câblée ou radioélectrique terrestre avec les gammes de fréquence. Ces paramètres doivent être entrés sur place ou détectés par l'utilisateur.

Dans l'état de la technique, on connaît l'enseignement du document technique WO 98/24200 A qui divulgue un procédé de commande d'un décodeur de télévision utilisant des tables LCT (Logical channel table) qui mettent en correspondance des désignations de multiplexes, des désignations de services, et des éléments de guide de programmes. On connaît également l'enseignement du document EP-A-0 834 991 qui divulgue un procédé de balayage fréquentiel pour détecter des désignations de multiplexes à certaines valeurs précises de fréquence. On connaît aussi l'enseignement du document WO 00/01213 A qui divulgue un procédé de balayage fréquentiel pour acquérir simultanément une information de fréquence et une information d'identifiant de canal (channel identifier).

Afin de permettre à un utilisateur de récupérer une liste complète de tous les services diffusés sur tous les réseaux et quels que soient les opérateurs, un balayage (on dit aussi scanning) a été mis en place. Habituellement ce type de balayage a aussi pour but d'établir directement la liste des services, indépendamment des tables DVB définissant explicitement une liste de service avec leur delivery associé. Ceci se traduit par une succession de visites de transpondeurs (on parle d'installation de transpondeurs) permettant de récupérer des services sur plusieurs réseaux, et non plus par une installation unique. Le principe du balayage est le suivant. On parcourt une plage de fréquence avec les différents paramètres associés (débit, symbole etc...) de sorte à trouver tous les pics de fréquence accessibles. Sur chacun des pics on récupère la liste de services diffusés par les opérateurs.

Cette manière de faire présente plusieurs inconvénients.

Premièrement le balayage est lent, il peut durer de l'ordre de 20 minutes s'il y a beaucoup de services (de chaînes de télévision distribuées et captables). On peut difficilement demander à l'utilisateur de patienter une telle durée, d'autant que cette dernière devrait être répétée à chaque fois qu'un nouveau service est distribué ou qu'un quelconque des multiplex d'un quelconque réseau change. L'expérience montre par ailleurs que les utilisateurs ne provoquent pas un tel balayage. Dans ces conditions, la liste des services accessibles avec un décodeur y est rarement à jour. En outre, si beaucoup de services sont disponibles à partir d'un transpondeur, le décodeur devra acquérir toutes les tables EIT present, EIT following ainsi que des tables PMT pour tous ses programmes. Toutes ces tables occupent alors beaucoup de place en mémoire.

L'invention a pour objet de résoudre ces problèmes en proposant une mise à jour des décodeurs qui tient compte du fait que des opérateurs peuvent diffuser une liste de références sur un de ces pics de fréquence. Une telle liste de références associe une désignation d'un service à une désignation d'un multiplex. Au besoin, un même service peut être associé à plusieurs multiplex s'il y a plusieurs modes de diffusion de ce service. Dans l'invention, cette liste de références est mémorisée dans une table de références du décodeur.

Selon l'invention, dans ce cas, il est inutile de sauvegarder les services rencontrés sur chacun des pics de fréquence puisqu'on peut les récupérer sur un pic précis à l'issue du balayage.

Par contre, il est toujours indispensable de sauvegarder les delivery associés à chacun des multiplex pour pouvoir ensuite zapper, c'est-à-dire changer de service, sur les services auxquels ces delivery renvoient.

Pour disposer alors de ces delivery, et plutôt que de les extraire d'un balayage global (dont on a indiqué les difficultés de réalisation), on préfère alors effectuer un balayage fréquentiel seul. Un tel balayage fréquentiel seul revient à détecter la présence ou l'absence d'un signal cohérent sur chaque valeur de fréquence (et ou d'orientation, et ou de polarisation, etc...) en réception. Un tel balayage fréquentiel est très rapide. En effet, quand un signal cohérent est détecté pour une fréquence, on relève, pour les paramètres physiques conditionnant cette détection, notamment la valeur de fréquence, la désignation du multiplex auxquel elle correspond. Cette désignation ts_id est véhiculée dans le signal cohérent détecté. Elle est rapidement accessible puisqu'elle fait partie du doublet ontwk_id, ts_id présent souvent dans le flux. On construit alors dans le décodeur une table de correspondance entre ces paramètres physiques, ce delivery, et cette désignation de multiplex.

En associant ces deux tables de références et de correspondance, on peut construire une troisième table dite de zapping permettant, lors de la sélection d'un service par un utilisateur, de paramètrer le décodeur avec les paramètres physiques trouvé en correspondance dans la table de zapping.

L'invention a donc pour objet un procédé de commande d'un décodeur de télévision pour provoquer la diffusion, à partir de ce décodeur, d'un service provenant d'un multiplex, un décodeur, un produit programme de commande de décodeur, et une mémoire lisible par un décodeur, tels que définis par les revendications. L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1 à 4 : des figures déjà commentées montrant l'architecture de distribution des informations à acquérir par les décodeurs ;
- Figure 5 : une représentation schématique d'un décodeur utilisable pour mettre en oeuvre le procédé selon l'invention.

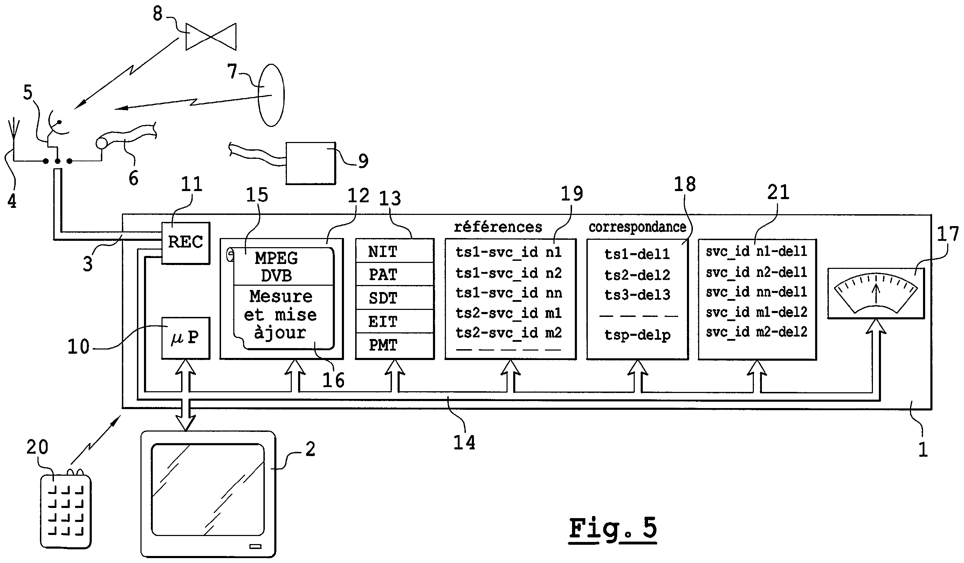

La figure 5 montre un décodeur 1 pour mettre en oeuvre le procédé selon l'invention. Le décodeur 1 est en relation avec un dispositif de visualisation 2 pour afficher sur l'écran de ce dispositif de visualisation des programmes radiodiffusés reçus sur une entrée 3 du décodeur. D'une manière connue l'entrée 3 peut être reliée à une antenne terrestre 4, une antenne satellite 5, ou à un câble de télédistribution 6. L'antenne terrestre 4 est en relation radio électrique avec un centre 7 de rediffusion, l'antenne 5 est en relation avec un satellite 8, le câble 6 est relié à un circuit 9 de diffusion d'un opérateur de télévision. L'opérateur 9 peut être par ailleurs celui qui transmet au circuit de rediffusion 7 et au satellite 8 les informations que ces derniers ont à diffuser.

Le décodeur 1 comporte dans son principe un microprocesseur 10 en relation avec des circuits de réception 11 reliés à l'entrée 3. Le microprocesseur 10 est relié au récepteur 11 ainsi qu'à une mémoire programme 12 et à une mémoire de données 13 par l'intermédiaire d'un bus 14. Le bus 14 peut par ailleurs être utilisé pour transmettre au dispositif de visualisation 2 les images à afficher. D'une manière connue la mémoire programme 12 peut comporter un programme 15 intitulé MPEG-DVB apte à mettre en oeuvre une opération de balayage et de détection des paramètres de réglage dans le flux reçu sur l'entrée 3 pour régler le décodeur 1. Ces paramètres sont mémorisés dans la table 13 au moment de leur décodage.

Dans l'invention pour résoudre les problèmes inhérents à la mise à jour et à la commande du décodeur, on prévoit de munir la mémoire programme 12 d'un programme complémentaire 16 de mesure, de mise à jour et de commande. Le programme 16 comporte deux opérations principales.

Il comporte d'abord des mesures. Ces mesures sont symbolisés ici par un circuit de mesure 17. Une première mesure de ces mesures est celle de la fréquence porteuse du flux en cours de réception. En pratique, les circuits de réception 11 comportent un synthétiseur de fréquence commandé par le microprocesseur 10 et relié à un mélangeur (non représentés). Quand le microprocesseur 10 envoie un ordre à ce synthétiseur, cet ordre est en lui-même représentatif de la fréquence de porteuse sur laquelle le décodeur doit se caler. Il suffit d'utiliser cette information d'ordre pour en déduire par décodage ou par lecture d'une table une fréquence de porteuse. En pratique cette première mesure revient à noter les paramètres physiques de réglage, les delivery (del1, del2, ... deln), auxquels est soumis le décodeur. Une deuxième mesure comporte, simultanément, sur le flux reçu, la lecture de la désignation ts_idi (ts_id1, ts_id2, ts_idp) du multiplex qui envoie ce flux reçu dans le décodeur. Avec ces mesures, il est alors possible de constituer dans le décodeur une table 18 de correspondance faisant correspondre à chaque identification de multiplex lue, tsi (qui correspond ici à un doublet de références d'un multiplex ontwk_idi et ts_idi), les paramètres deli (del1, del2,...) de réglage du décodeur (notamment la fréquence) au moment de chaque détection. Cette constitution de table 18 est très rapide car l'information tsi est présente souvent dans le flux. Il est alors possible de balayer toute une plage de fréquence pour rechercher toutes les occurrences d'un flux détecté cohérent.

Le programme 16 comporte encore une opération de mise à jour d'une table de références diffusée par un opérateur sur un des pics de fréquence. A cet effet le décodeur 1 comporte une table 19 de références dont les enregistrements font se correspondre des désignations de services, svc_idi (svc_idn1, svc_idn2, svc_idnn), et des désignations de multiplex, tsi.

Nanti de cette table, le décodeur 1 peut recevoir des commandes notamment émise par une télécommande 20, désignant un service svc_idi. Pour simplifier, le décodeur peut comporter une table 21 dite de zapping dont les enregistrements mettent en correspondance des désignations de service, svc_idi, avec des paramètres de réglage deli qui leur correspondent. Plus exactement la table 21 pourra comprendre, en regard des paramètres de réglage deli, des triplets ontwk_idi, ts_idi, et svc_idi. Le décodeur recevant une commande correspondant à svc_idi de la télécommande 20 appliquera sur les circuits de réception 11 les paramètres deli puisés dans la mémoire 21. La mémoire 21 peut par ailleurs être remplacée par une lecture de la table 19, pour en extraire la désignation tsi de multiplex qui correspond au service sélectionné par l'utilisateur, et une lecture de la table 18 pour en extraire les paramètres deli qui correspondent à la désignation tsi de multiplex extraite.

La liste des services formant la table de références doit être constituée par un opérateur de télévision numérique. Elle est plus facilement mise à disposition des utilisateurs si elle est chargée dans un serveur de données. Elle est normalement tenue à jour par l'opérateur, de sorte qu'une simple consultation de cette liste en téléchargement remplace tous les balayages.

Dans l'invention on prévoit donc de munir la mémoire programme 12 d'un programme complémentaire 16 de connexion à un serveur de téléchargement et de mémorisation pour mettre à jour dans la mémoire 19 des informations collectées par un opérateur. Par exemple le programme 16 peut comporter la mise en oeuvre d'un modem (non représenté) lui aussi relié au bus 14 et qui peut entrer en relation, à la demande du microprocesseur 10, en exécution du programme 16, notamment par l'intermédiaire du réseau Internet, avec un serveur de téléchargement. En agissant ainsi, le chargement de la mémoire 19 (ou 13) se réalise par un canal spécifique, indépendant du flux normal (selon la norme) des images diffusées par les circuits 7, 8 ou 9. La mise à jour d'une mémoire 19 par une connexion au réseau Internet et prélèvement dans un serveur est parfaitement connue et ne nécessite pas d'être plus amplement décrite.

De préférence, un canal spécifique correspondra à un pic de fréquence appartenant au flux radioélectrique ou câblé. De sorte qu'un modem et ou une connexion à Internet ne sera pas nécessaire. A cet effet, il est possible de créer, à partir des organes de diffusion 7, 8 et 9 eux-mêmes, un canal spécifique de téléchargement. Dans ce cas ce canal spécifique peut s'apparenter à un service (voir figure 1) associé à un mode de transmission de données d'une part et à un mode d'exécution d'un programme de mise à jour de la mémoire 19 d'autre part. Il est ainsi possible que toutes les nuits, ou à un instant programmé de façon régulière, à l'endroit où se trouve le décodeur 1, le microprocesseur 10 en application du programme 16 effectue une opération de changement de canal pour se connecter au canal spécifique retenu (au service concerné), prélever les informations téléchargées et mettre à jour toute la table 19. De ce point de vue, la différence entre le programme 15 et le programme 16 est que, pour ce dernier, la reconstruction des tables est plus rapide, puisque chaque table peut alors être envoyée dans le canal spécifique selon un protocole correspondant bien à sa mémorisation directe dans la mémoire 19. Ou bien la liste de services complète sur un des multiplex est constituée par un ensemble de tables SDT, par un ensemble de tables BAT ou encore par tout autre table de format privé.

La liste intégrale des services est entretenue en temps réel par le serveur et celui-ci constitue une base de données téléchargeable, notamment à la demande de l'utilisateur. La durée de téléchargement est de loin inférieure à la durée de balayage. De préférence le téléchargement est effectué la nuit à l'endroit du décodeur de télévision, ou encore mieux lorsque le décodeur est mis en veille par l'utilisateur. En effet au moment de la mise en veille, ou par exemple dix minutes après celle-ci, on peut estimer que l'utilisateur a abandonné l'utilisation de son décodeur et que celui-ci peut lancer une procédure de téléchargement. De préférence cette procédure de téléchargement est interrompue si le décodeur est de nouveau sollicité pour une utilisation.

Lors du téléchargement de la table de références 19, il peut être détecté l'apparition d'un nouveau multiplex, tout simplement par ce que la table 19 chargée comporte une désignation de multiplex inconnue de la table 18. Dans ce cas on prévoit de provoquer, ou de faire provoquer par l'utilisateur, la conduite d'un nouveau balayage fréquentiel afin de mettre à jour la table 18.

## Revendications

1. Procédé de commande d'un décodeur de télévision pour provoquer la diffusion, à partir de ce décodeur (1), d'un service provenant d'un multiplex, le procédé comportant :
- un téléchargement, par l'intermédiaire d'un canal spécifique, dans le décodeur de télévision, de signaux de table (19) de références faisant correspondre des désignations de multiplex à des désignations de service,
- une application de paramètres de delivery à des circuits de réception (11) du décodeur pour le commander à partir d'une désignation d'un service correspondant,
- un balayage fréquentiel pour détecter des désignations (ts1, ts2, ..., tsp) de multiplex à certaines valeurs de fréquence, - une première mesure, dans un flux envoyé par le multiplex au décodeur, des paramètres physiques (del1, del 2, ... , deln), dits de delivery, et notamment de la valeur de fréquence, auxquels les signaux reçus sont cohérents,
- une deuxième mesure comportant, sur le flux reçu, la lecture de la désignation (ts1, ts2, ..., tsp) du multiplex qui envoie ce flux reçu dans le décodeur,
- une construction d'une table (18) de correspondance pour associer ces paramètres de delivery et ces désignations de multiplex, et
- une vérification que des désignations de multiplex présentes dans la table de références sont également présentes dans la table de correspondance, et
- si ce n'est pas le cas, une provocation d' un nouveau balayage fréquentiel.

2. Procédé selon la revendication 1, **caractérisé en ce que** le téléchargement est réalisé par un canal spécifique du flux câblé.

3. Procédé selon l'une des revendications 1 à 2, **caractérisé en ce que** le téléchargement est réalisé par un canal spécifique du flux radioélectrique.

4. Procédé selon l'une des revendications 1 à 3, **caractérisé en ce que** le téléchargement est réalisé par un canal téléphonique.

5. Procédé selon l'une des revendications 1 à 4, **caractérisé en ce que** le téléchargement est réalisé lors d'une veille du décodeur de télévision.

6. Procédé selon l'une des revendications 1 à 5, **caractérisé en ce que** le téléchargement est réalisé la nuit, ou à un instant programmé de façon régulière, à l'endroit du décodeur de télévision.

7. Procédé selon l'une des revendications 1 à 6, **caractérisé en ce que** on mémorise dans une table (21) de zapping des correspondances entre des désignations de service (svc_idn1, svc_idn2, ... svc_idnn) et des paramètres de delivery.

8. Décodeur pour mettre en oeuvre le procédé selon l'une quelconque des revendications précédentes 1 à 7.

9. Produit programme de commande de décodeur chargeable directement dans la mémoire interne d'un décodeur comprenant des portions de code de logiciel qui, lorsque ledit programme est exécuté par un décodeur, conduisent celui-ci à mettre en oeuvre toutes les étapes du procédé selon l'une quelconque des revendications 1 à 7.

10. Mémoire programme lisible par un décodeur comprenant un processeur, la mémoire programme comprenant le programme de commande de décodeur selon la revendication précédente.

## Patentansprüche

1. Steuerverfahren eines Fernseh-Decoders, um ausgehend von diesem Decoder (1) die Ausstrahlung eines von einem Multiplex stammenden Dienstes hervorzurufen, wobei das Verfahren umfasst:
- ein Herunterladen mittels eines spezifischen Kanals von ReferenzTabelle-Signalen (19) in den Fernseh-Decoder, die dafür sorgen, dass Multiplex-Bezeichnungen Dienstbezeichnungen entsprechen,
- eine Anwendung von Delivery-Parametern zu Empfangsschaltkreisen (11) des Decoders zu dessen Steuerung ausgehend von einer Bezeichnung eines entsprechenden Dienstes,
- ein Frequenzabtasten zum Detektieren der Bezeichnungen (ts1, ts2, ... tsp) des Multiplexes an bestimmten Frequenzwerten, - einer ersten Messung, in einem von dem Multiplex des Decoders versandten Strom, physischen Parametern (del1, del2, ..., dein), bezeichnet als Delivery, und insbesondere des Frequenzwertes, zu denen die versandten Signale kohärent sind,
- eine zweite Messung, umfassend auf dem Rückstrom das Lesen der Bezeichnung (ts1, ts2, ..., tsp) des Multiplexes, der diesen, in dem Decoder empfangenen Strom versendet,
- eine Konstruktion einer Korrespondenztabelle (18), um diese Delivery-Parameter und diese Multiplex-Bezeichnungen zuzuordnen, und
- eine Überprüfung, dass die Bezeichnungen von in der Referenztabelle vorhandenen Multiplexe ebenfalls in der Korrespondenztabelle vorhanden sind, und
- wenn dies nicht der Fall ist, ein Hervorrufen eines neuen Frequenzabtastens.

2. Verfahren gemäß Anspruch 1, **dadurch gekennzeichnet, dass** das Herunterladen durch einen spezifischen Kanal des verkabelten Stroms realisiert ist.

3. Verfahren gemäß einem der Ansprüche 1 bis 2, **dadurch gekennzeichnet, dass** das Herunterladen durch einen spezifischen Kanal des funkelektrischen Stroms realisiert ist.

4. Verfahren gemäß einem der Ansprüche 1 bis 3, **dadurch gekennzeichnet, dass** das Herunterladen durch einen Telefonkanal realisiert ist.

5. Verfahren gemäß einem der Ansprüche 1 bis 4, **dadurch gekennzeichnet, dass** das Herunterladen bei einem Standby des Fernseh-Decoders realisiert ist.

6. Verfahren gemäß einem der Ansprüche 1 bis 5, **dadurch gekennzeichnet, dass** das Herunterladen nachts oder zu einem regelmäßig programmierten Zeitpunkt an der Stelle des Fernseh-Decoders realisiert ist.

7. Verfahren gemäß einem der Ansprüche 1 bis 6, **dadurch gekennzeichnet, dass** in einer Zapping-Tabelle (21) Entsprechungen zwischen DienstBezeichnungen (svc idnl, svc_idn2, ... svc_idnn) und Delivery-Parameter gespeichert werden.

8. Decoder zur Umsetzung des Verfahrens gemäß irgendeinem der voranstehenden Ansprüche 1 bis 7.

9. Steuerprodukt eines Decoders, das direkt in den internen Speicher eines Decoders ladbar ist, umfassend Softwarecode-Abschnitte, die, wenn das genannte Programm durch einen Decoder ausgeführt ist, diesen dazu veranlassen, alle Schritte des Verfahrens gemäß irgendeinem der Ansprüche 1 bis 7 umzusetzen.

10. Speicherprogramm, das durch einen Decoder lesbar ist, umfassend einen Prozessor, wobei der Programmspeicher das Decoder-Steuerprogramm gemäß dem voranstehenden Anspruch umfasst.

## Claims

1. A method for controlling a set top box for causing, from this set top box (1), a service from a multiplex to be broadcast, the method including:
- downloading, through a specific channel, in the set top box, signals of reference table (19) matching multiplex designations to service designations,
- applying delivery parameters to reception circuits (11) of the set top box to control it from a designation of a corresponding service,
- frequency scanning for detecting designations (ts1, ts2,..., tsp) of multiplex at some frequency values, - a first measurement, in a stream sent by the multiplex to the set top box, of the physical parameters (dell, del2,..., deln), called delivery parameters, and in particular of the frequency value, to which the signals received are coherent,
- a second measurement including, on the received stream, reading the designation (ts1, ts2,..., tsp) of the multiplex which sends this received stream in the set top box,
- constructing a matching table (18) to associate these delivery parameters and these multiplex designations, and
- checking that multiplex designations present in the reference table are also present in the matching table, and
- if not, causing a new frequency scanning.

2. The method according to claim 1, **characterised in that** downloading is performed by a channel specific to the wired stream.

3. The method according to one of claims 1 and 2, **characterised in that** downloading is performed by a channel specific to the radio stream.

4. The method according to one of claims 1 to 3, **characterised in that** downloading is made by a telephone channel.

5. The method according to one of claims 1 to 4, **characterised in that** downloading is made during a standby mode of the set top box.

6. The method according to one of claims 1 to 5, **characterised in that** downloading is performed at night, or at an instant regularly programmed, at the place of the set top box.

7. The method according to one of claims 1 to 6, **characterised in that** in a zapping table (21), matching between service designations (svc_idn1, svc_idn2, ..., svc_idnn) and delivery parameters are stored.

8. A set top box for implementing the method according to any of the preceding claims 1 to 7.

9. A program product for controlling a set top box directly loadable in the internal memory of a set top box comprising software code portions which, when said program is run by a set top box, cause the same to implement all the steps of the method according to any of claims 1 to 7.

10. A program memory readable by a set top box comprising a processor, the program memory comprising the program for controlling a set top box according to the preceding claim.
